# EUROPÄISCHE PATENTANMELDUNG

(11) **EP 1 483 961 A1**
(43) Veröffentlichungstag der Anmeldung: **08.12.2004**
(21) Anmeldenummer: 04012847.2
(22) Anmeldetag: 29.05.2004
(51) Int. Cl.: A01K 63/06

(54) **Beleuchtungsvorrichtung, insbesondere für Aquarien und Terrarien**

(30) Priorität: 04.06.2003 DE 20308786 U
(71) Anmelder: Iks Kugel & Walch Computer Systeme GmbH, 76307 Karlsbad (DE)
(72) Erfinder: Walch, Jürgen, 76307 Karlsbad (DE)
(74) Vertreter: Brommer, Hans Joachim, Dr.-Ing.

(57) **Zusammenfassung**

Die Erfindung betrifft eine Beleuchtungsvorrichtung, insbesondere für Aquarien oder Terrarien mit zumindest einer an einem Gehäuse 13 angeordneten Leuchtquelle und einem elektronisch dimmbaren Vorschaltgerät 11, wobei das Vorschaltgerät an eine elektronische Steuerung 1 angeschlossen ist zur Veränderung der Lichtintensität, um den Sonnenaufgang, Sonnenuntergang, Bewölkung oder dergleichen zu simulieren. Wesentlich dabei ist, dass die elektronische Steuerung 1 einen Mikroprozessor 2 und einen Speicher 8 aufweist und dass in diesem Speicher zumindest eine gewünschte Zeitspanne zu speichern ist, innerhalb derer die Lichtintensität verändert wird.

## Beschreibung

Die Erfindung betrifft eine Beleuchtungsvorrichtung, insbesondere für Aquarien oder Terrarien, mit zumindest einer an einem Gehäuse angeordneten Leuchtquelle und einem elektronisch dimmbaren Vorschaltgerät, wobei das Vorschaltgerät an eine elektronische Steuerung angeschlossen ist zur Veränderung der Lichtintensität, um den Sonnenaufgang, Sonnenuntergang, Bewölkung oder dergleichen zu simulieren.

Derartige dimmbare Beleuchtungsvorrichtungen sind bereits bekannt. Sie vermeiden das abrupte Ein- und Ausschalten der Beleuchtung, indem durch das dimmbare Vorschaltgerät die Lichtintensität allmählich von 0 % auf 100 % und umgekehrt verändert wird in Anlehnung an den natürlichen Helligkeitsverlauf bei Sonnenaufgang, Sonnenuntergang oder Bewölkung. Dieses langsame Dimmen sorgt für ein besseres Wohlbefinden der Tiere und Pflanzen.

Der vorliegenden Erfindung die Aufgabe zugrunde, die bekannte Beleuchtungsvorrichtung hinsichtlich der Steuerung der Lichtintensität zu verbessern. Dabei soll sich die Erfindung durch einfachen, kostengünstigen Aufbau sowie durch leichte Bedienung auszeichnen.

Diese Aufgabe wird erfindungsgemäß dadurch gelöst, dass die elektronische Steuerung einen Mikroprozessor und einen Schreib- und Lese-Speicher aufweist und dass in diesem Speicher zumindest eine gewünschte Zeitspanne zu speichern ist, innerhalb derer die Veränderung der Lichtintensität stattfindet.

Die Erfindung beruht also auf der Erkenntnis, dass nicht nur die Einschaltzeitpunkte für den Dimmvorgang frei wählbar sein sollen, sondern das anstelle der bisher fest vorgegebenen Zeitdauer für den Dimmvorgang eine individuelle Verlängerung oder Verkürzung desselben je nach den Wünschen des Kunden möglich sein sollte. Dies gelingt durch den beschreibbaren und lesbaren Speicher, der Bestandteil des Mikroprozessors oder ein separates Bauteil sein kann und der die Speicherung unterschiedlicher Zeitspannen für den Dimmvorgang gestattet.

Besonders zweckmäßig ist es, wenn der Speicher ein nicht flüchtiger Speicher ist. Dadurch ist sichergestellt, dass bei einem eventuellen Stromausfall die gespeicherten Zeitspannen nicht verloren gehen und der Speicher nicht neu programmiert werden muss.

Für die Eingabe der gewünschten Zeitspanne, innerhalb derer die Veränderung der Lichtintensität durchgeführt werden soll, bieten sich dem Durchschnittsfachmann verschiedene Möglichkeiten. Besonders anwenderfreundlich ist es, hierfür einen Schalter zu verwenden. Dies gilt insbesondere dann, wenn die Beleuchtungsvorrichtung in an sich bekannter Weise an eine Zeitschaltuhr angeschlossen ist, die den Beginn des Sonnenaufgangs, Sonnenuntergangs, der Bewölkung oder dergleichen vorgibt und wenn diese Zeitschaltuhr bereits einen Ein/Aus-Schalter aufweist. Dann kann dieser Schalter sogleich als Signalgeber für die Menüwahl am Mikroprozessor oder direkt für die Eingabe der gewünschten Zeitspanne in den Speicher verwendet werden. Alternativ ist auch eine Eingabe der zu speichernden Zeitspannen über einen Computer möglich.

Für die meisten Anwendungsfälle genügt es, wenn die gewünschte, eingespeicherte Zeitspanne für alle Dimmvorgänge verwendet wird. Eine besonders zweckmäßige Weiterbildung der Erfindung besteht aber darin, dass unterschiedliche Zeitspannen für Sonnenaufgang, Sonnenuntergang, Bewölkung oder dergleichen individuell gespeichert werden können. Dadurch lässt sich der zu- oder abnehmende Helligkeitsverlauf in besonders hohem Maße an die Vorgänge in der Natur oder an die Eigenheiten der Tiere und Pflanzen anpassen.

Eine besonders ansprechende Weiterbildung der Erfindung besteht darin, dass die Beleuchtungseinrichtung zusätzlich auch eine Steuerung der Lichtintensität in Anlehnung an die Mondphasen gestattet. Dazu können zum einen unterschiedliche Lichtintensitäten für den Mondschein, nämlich für zunehmenden und abnehmenden Mond erzeugt werden, also beispielsweise 15 Tage zunehmende Lichtintensität entsprechend dem zunehmenden Mond und etwa 15 Tage abnehmende Lichtintensität entsprechend dem abnehmenden Mond. Zum anderen können dabei auch unterschiedliche Zeitspannen für den Mondaufgang und/oder den Monduntergang individuell gespeichert werden. Eine derartige Mondphasen-Steuerung ist besonders für nachtaktive Tiere ein großer Gewinn.

Eine andere zweckmäßige Weiterbildung der Erfindung besteht darin, dass die elektronische Steuerung einen Kalender-Baustein - also einen elektronischen Kalender - für das Datum und die Uhrzeit aufweist. Dadurch kann Beginn und Dauer der Dimmphasen sowohl für den Sonnen-Aufgang und -Untergang wie auch für den Mond-Aufgang und -Untergang und auch die Mondhelligkeit an den natürlichen Jahresverlauf angepasst werden. Diese Anpassung ist durch den Benutzer möglich; es liegt aber gleichermaßen auch im Rahmen der Erfindung, die gewünschten Zeitspannen schon beim Hersteller vorzuprogrammieren. Optimal ist es, dass der Prozessor aus dem Kalender-Baustein das Datum und die Uhrzeit ausliest und daraus Beginn und Dauer von Sonnen-Aufgang, -Untergang, Mond-Aufgang und -Untergang sowie die Mondhelligkeit aufgrund eines vorgegebenen Programmes errechnet.

Der Mikroprozessor mit seinem integrierten oder externen Schreib- und Lese-Speicher kann als separate Baueinheit ausgeführt sein. Besonders günstig ist es jedoch, diese Teile unmittelbar in das Gehäuse einzubauen, das die Leuchtquelle trägt. Dadurch zeichnet sich die erfindungsgemäße Beleuchtungsvorrichtung durch kompakten Aufbau aus.

In gleiche Richtung zielt auch der Gedanke, die Zeitschaltuhr, die den Beginn von Sonnenaufgang, Sonnenuntergang, Bewölkung, Mondaufgang etc. vorgibt, nicht als separates Bauteil außerhalb der Beleuchtungsvorrichtung vorzusehen, sondern diese Zeitschaltuhr in das Gehäuse für die Leuchtquelle einzubauen. Der Einbau hat so zu erfolgen, dass die Bedienungstasten der Zeitschaltuhr gut zugänglich an einer Gehäuseseite positioniert sind.

Weitere Merkmale und Vorteile der Erfindung ergeben sich aus der nachfolgenden Beschreibung eines Ausführungsbeispiels an Hand der Zeichnung und aus der Zeichnung selbst. Dabei zeigt:
- Figur 1: ein Blockschaltbild auf einer Aquarien/Terrarien-Beleuchtung mit Steuerung;
- Figur 2: ein Beispiel für einen Tageslichtverlauf;
- Figur 3: ein Beispiel für eine praktische Ausführung einer Aquarienleuchte;
- Figur 4: ein weiteres Beispiel für die praktische Ausführung einer Aquarienleuchte.

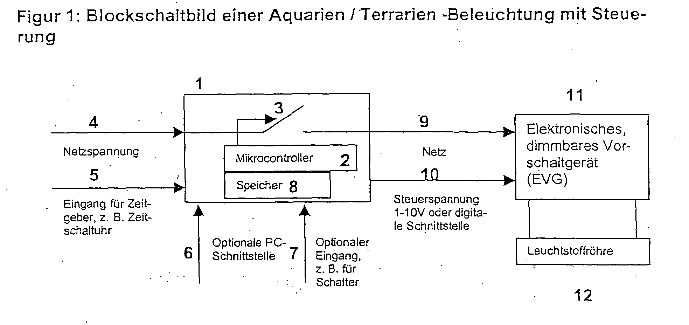

### Zu Figur 1:

Die Steuerung 1 besteht im Wesentlichen aus einem Mikrocontroller 2 und einem Speicher 8. Dabei kann der Speicher mit auf dem Mikrocontroller 2 integriert sein. Er kann sich aber auch extern befinden. Über den Schalter, welcher vom Mikrocontroller gesteuert wird, wird die Stromversorgung 9 zum elektronischen Vorschaltgerät EVG 11 ein- bzw. ausgeschaltet. Dies ist notwendig, um die Leuchtstoffröhre 12 ganz auszuschalten, da über den Steuereingang des EVG 11 das Licht nur gedimmt, nicht aber ganz ausgeschaltet werden kann. Über den Eingang 5 wird ein Zeitgeber, z. B. eine Zeitschaltuhr an die Steuerung 1 angeschlossen. Der Zustand dieses Einganges wird vom Mikroprozessor bzw. vom Programm ständig überwacht. Je nach Zustand werden dann die gewünschten Beleuchtungs-Aktionen ausgeführt.

Über die optionale PC-Schnittstelle 6 können die verschiedensten Zeiten von einem PC aus vorgegeben werden. Der optionale Eingang für einen Schalter 7 kann ebenfalls für das Eingeben der verschiedenen Zeiten verwendet werden.

Mit dem Schalter 7 kann die Beleuchtung jederzeit auf 100 % gestellt werden, damit der Benutzer jederzeit - unabhängig vom Beleuchtungsprogramm - das Aquarium voll ausleuchten kann.

Der Ausgang 10 ist mit dem Steuereingang des EVG 11 verbunden. Dieser Ausgang 10 kann als analoge Schnittstelle mit 1 V bis 10 V oder als digitale Schnittstelle ausgeführt sein.

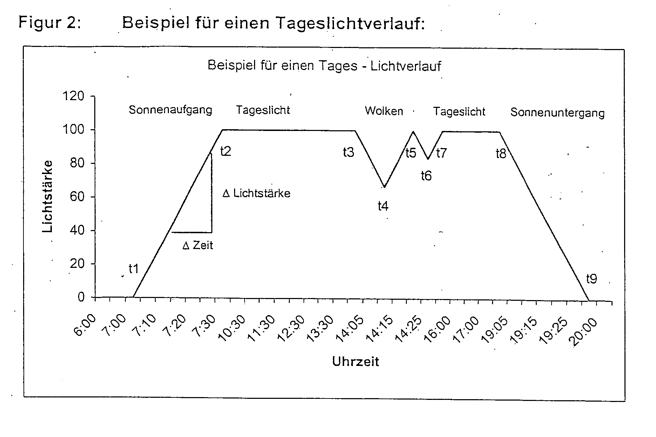

### Zu Figur 2:

Wird zum Zeitpunkt t1 z. B. der Ausgang einer Zeitschaltuhr eingeschaltet (Spannung ein), wird dies vom Mikrocontroller erkannt und der Dimmvorgang wird gestartet. In Abhängigkeit der vorgegebenen Zeitdauer für den Sonnenaufgang wird das Licht von 0 % Lichtstärke bis zum Zeitpunkt t2 auf 100 % Lichtstärke hochgedimmt.

Zum Zeitpunkt t3 schaltet die Zeitschaltuhr aus (Spannung aus). Dies veranlasst die Steuerung dazu, das Licht nach unten zu dimmen.

Zum Zeitpunkt t4 schaltet die Zeitschaltuhr wieder ein (Spannung an). Dadurch wird die Richtung des Dimmvorganges umgekehrt. Das Licht wird nun wieder hochgedimmt usw. Es wird also durch jedes Schalten der Zeitschaltuhr ein Richtungswechsel des Dimmvorganges erzeugt. Zum Zeitpunkt t9 ist das Licht dann ganz aus.

Die Zeitspannen, während denen die Dimmvorgänge ablaufen, sind im Speicher 8 individuell gespeichert.

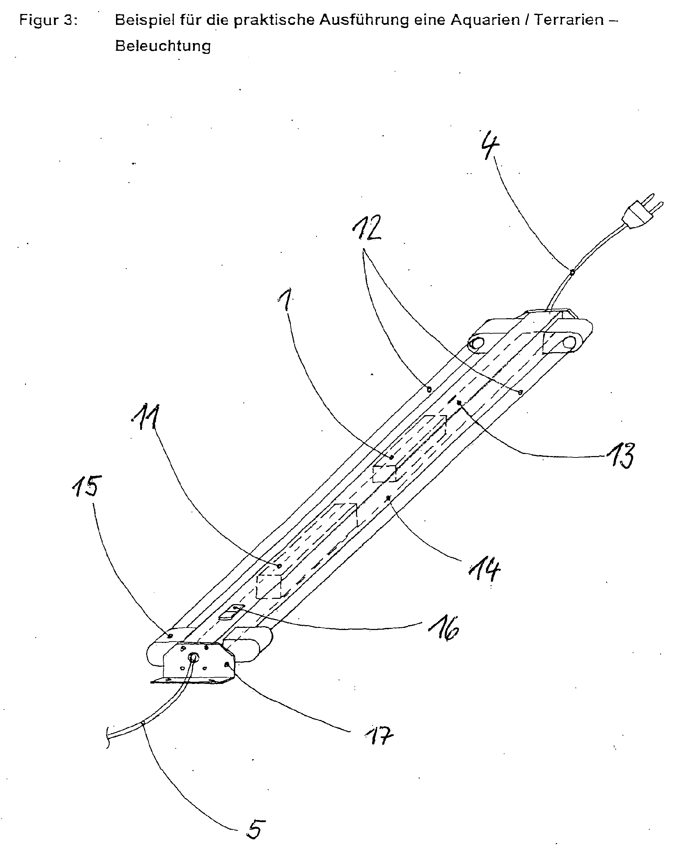

### Zu Figur 3:

Innerhalb eines Gehäuses 13, das die Leuchtquellen 12 trägt, befinden sich z. B. auf einer Montageschiene 14 das dimmbare EVG 11 und die Steuerung 1. An dem Gehäuse 13 sind auch Fassungen 15 für zwei Leuchtstoffröhren 12 und ein spritzwasserdichter Schalter 16 für das manuelle Einschalten der Röhren 12 angebracht. Die Netzversorgungsleitung 4 und die Steuerleitung 5 sind wasserdicht nach außen geführt. Über die Steuerleitung 5 kann z. B. ein externer Zeitgeber mit der Steuerung 1 verbunden werden. Mit Hilfe von Montagewinkeln 17 kann die Beleuchtungsvorrichtung an einer Fläche montiert werden.

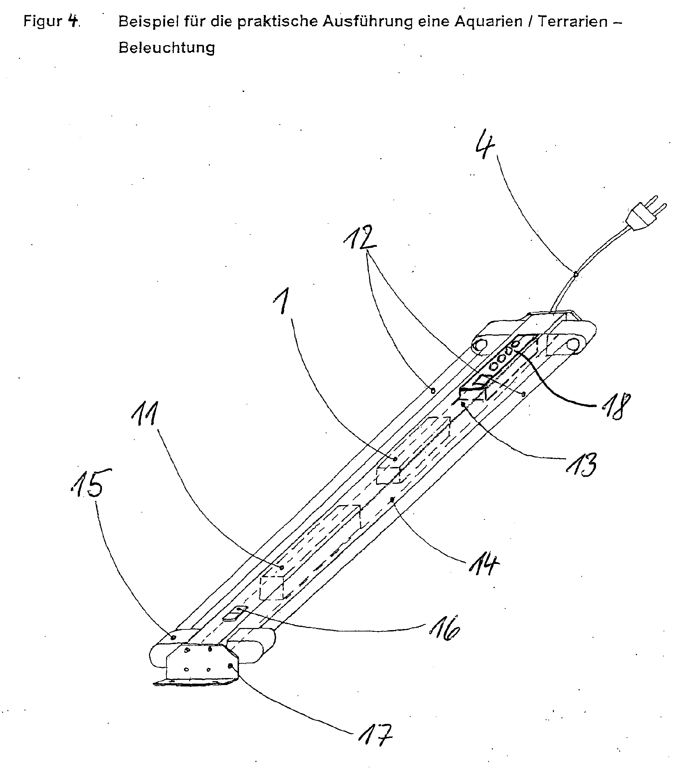

### Zu Figur 4:

Die Bauform gemäß Figur 4 unterscheidet sich von dem zuvor beschriebenen Ausführungsbeispiel dadurch, dass in das Gehäuse 13 zusätzlich noch eine Zeitschaltuhr 18 eingebaut ist. Der Einbau erfolgt etwa flächenbündig mit der Außenseite des Gehäuses 13, derart, dass die Betätigungselemente der Zeitschaltuhr und das Display von außen gut zugänglich bzw. sichtbar sind. Diese in die Beleuchtungsvorrichtung integrierte Zeitschaltuhr hat den Vorteil, dass alle Bedien- und Steuerungselemente an der Beleuchtungsvorrichtung selbst angeordnet sind und die Leitung 5 entfallen kann.

## Patentansprüche

1. Beleuchtungsvorrichtung, insbesondere für Aquarien oder Terrarien, mit zumindest einer an einem Gehäuse (13) angeordneten Leuchtquelle und einem elektronisch dimmbaren Vorschaltgerät (11), wobei das Vorschaltgerät an eine elektronische Steuerung (1) angeschlossen ist zur Veränderung der Lichtintensität, um den Sonnenaufgang, Sonnenuntergang, Bewölkung oder dergleichen zu simulieren,
**dadurch gekennzeichnet,**
**dass** die elektronische Steuerung (1) einen Mikroprozessor (2) und einen Schreib- und Lese-Speicher (8) aufweist und dass in diesem Speicher zumindest eine gewünschte Zeitspanne zu speichern ist, innerhalb derer die Veränderung der Lichtintensität erfolgt.

2. Beleuchtungsvorrichtung nach Anspruch 1,
**dadurch gekennzeichnet,**
**dass** der Speicher (8) ein nicht flüchtiger Speicher ist.

3. Beleuchtungsvorrichtung nach Anspruch 1,
**dadurch gekennzeichnet,**
**dass** unterschiedliche Zeitspannen für Sonnenaufgang, Sonnenuntergang, Bewölkung oder dergleichen individuell speicherbar sind.

4. Beleuchtungsvorrichtung nach Anspruch 1,
**dadurch gekennzeichnet,**
**dass** außerdem unterschiedliche Lichtintensitäten für den Mondschein, insbesondere für zunehmenden und abnehmenden Mond, gegebenenfalls auch unterschiedliche Zeitspannen für Mondaufgang und Monduntergang individuell speicherbar sind.

5. Beleuchtungsvorrichtung nach Anspruch 1,
**dadurch gekennzeichnet,**
**dass** sie in an sich bekannter Weise an eine Zeitschaltuhr (5) angeschlossen ist, die den Beginn des Sonnenaufgangs, Sonnenuntergangs, Bewölkung oder dergleichen vorgibt.

6. Beleuchtungsvorrichtung nach Anspruch 5,
**dadurch gekennzeichnet,**
**dass** die Zeitschaltuhr einen Ein/Aus-Schalter aufweist, der zugleich als Signalgeber für die Speicherung der gewünschten Zeitspanne(n) fungiert.

7. Beleuchtungsvorrichtung nach Anspruch 1,
**dadurch gekennzeichnet,**
**dass** die Eingabe der gewünschten Zeitspanne(n) in den Speicher durch zumindest einen Schalter (5 und/oder 7) erfolgt.

8. Beleuchtungsvorrichtung nach Anspruch 1,
**dadurch gekennzeichnet,**
**dass** die elektronische Steuerung einen Kalender-Baustein für das Datum und die Uhrzeit aufweist.

9. Beleuchtungsvorrichtung nach Anspruch 1,
**dadurch gekennzeichnet,**
**dass** der Mikroprozessor (2) und der darin integrierte oder separate Schreibeund Lese-Speicher (8) in das Gehäuse (13) für die Lichtquelle (12) eingebaut sind.

10. Beleuchtungsvorrichtung nach Anspruch 1 oder 9,
**dadurch gekennzeichnet,**
**dass** zusätzlich eine Zeitschalt-Uhr (18) in das Gehäuse (13) für die Leuchtquelle (12) eingebaut ist.

11. Beleuchtungsvorrichtung nach Anspruch 1,
**dadurch gekennzeichnet,**
**dass** die Steuerung (1) und das Vorschaltgerät (11) eine Baugruppe auf einer Leiterplatte sind.

12. Beleuchtungsvorrichtung nach Anspruch 1,
**dadurch gekennzeichnet,**
**dass** mehrere Vorschaltgeräte mit der Steuerung betrieben werden können.

13. Verfahren zum Betrieb einer Beleuchtungsvorrichtung, insbesondere für Aquarien oder Terrarien, mit zumindest einer an einem Gehäuse (13) angeordneten Lichtquelle (12) und einem elektronisch dimmbaren Vorschaltgerät (11),
wobei das Vorschaltgerät (11) an eine elektronische Steuerung (1) angeschlossen ist zur Veränderung der Lichtintensität, um den Sonnenaufgang, Sonnenuntergang, Bewölkung oder dergleichen zu simulieren,
**dadurch gekennzeichnet,**
**dass** die elektronische Steuerung einen Mikroprozessor (2) und einen Speicher (8) aufweist und dass in dem Speicher (8) zumindest eine gewünschte Zeitspanne gespeichert wird, innerhalb derer die Veränderung der Lichtintensität stattfindet.
